# EUROPEAN PATENT APPLICATION

(11) **EP 4 817 985 A1**
(43) Date of publication of application: **07.10.2026**
(21) Application number: 23960212.1
(22) Date of filing: 30.11.2023
(51) Int. Cl.: B60W 60/00, B60W 40/04, B60W 40/06

(54) **DRIVING ASSISTANCE METHOD AND DRIVING ASSISTANCE DEVICE**

(71) Applicant: Nissan Motor Co., Ltd., Yokohama-shi, Kanagawa 221-0023 (JP)
(72) Inventor: OKAWARA, Masahiro, Atsugi-shi, Kanagawa 243-0123 (JP); TAIRA, Yasuhisa, Atsugi-shi, Kanagawa 243-0123 (JP); UWABO, Kazuyuki, Atsugi-shi, Kanagawa 243-0123 (JP)
(74) Representative: Grünecker Patent- und Rechtsanwälte PartG mbB
(86) International application number: PCT/JP2023/042992
(87) International publication number: WO 2025/115195

(57) **Abstract**

A processor (10) in which this driving assistance method is used operates to: detect a traffic restriction sign (OB1, OB2, OB3) on a travel lane (L1); restrict contents of driving assistance executed in a traffic restricted section (TR) recognized based on information indicated by the traffic restriction sign (OB1); and when a subject vehicle (V1) changes lanes to a branch lane (BL) that branches from the travel lane while the restriction is in effect, cancel the restriction and execute the driving assistance for the subject vehicle (V1).

## Description

### Technical Field

The present disclosure relates to a driving assistance method and a driving assistance device.

### Background Art

A technique is known that sets a predetermined autonomous driving level when a construction section on one side of a first travel path is closed to traffic and a construction section is recognized through which one-way alternating traffic is possible using the other side of a second travel path.

### Prior Art Documents

### Patent Documents

Patent Document 1: JP2019-156195A

### Summary of Invention

### Problems to be solved by Invention

When a subject vehicle changes lanes into a branch lane, it can be difficult to determine the end point of a traffic restricted section, and it will be not able to perform appropriate driving assistance.

A problem to be solved by the present invention is to perform appropriate driving assistance when a subject vehicle changes lanes to a branch lane.

### Means for solving Problems

The present invention solves the above problem trough: restricting contents of driving assistance executed in a traffic restricted section recognized based on a traffic restriction sign on a travel lane; and when the subject vehicle changes lanes to a branch lane that branches from the travel lane while the restriction is in effect, canceling the restriction.

### Effect of Invention

According to the present invention, when the subject vehicle changes lanes to a branch lane, appropriate driving assistance can be performed.

### Brief Description of Drawings

[FIG. 1] FIG. 1 is a block diagram illustrating the hardware configuration of the driving assistance system.
[FIG. 2] FIG. 2 is a first flowchart illustrating the processing procedure for driving assistance.
[FIG. 3] FIG. 3 is a second flowchart illustrating the processing procedure for driving assistance.
[FIG. 4] FIG. 4 is a diagram for describing an example of driving assistance levels.
[FIG. 5] FIG. 5 is a diagram for describing the processing in a branch lane.

### Mode(s) for carrying out Invention

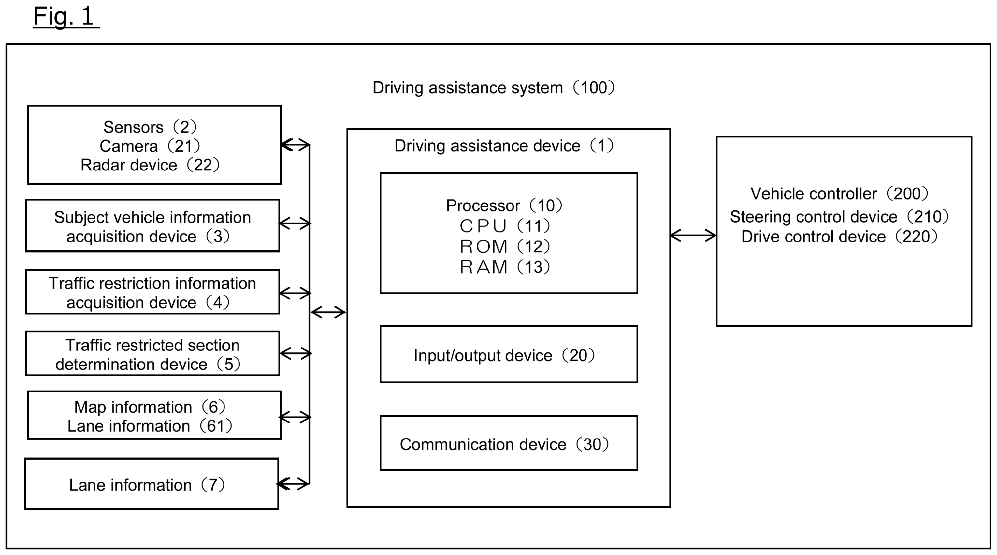

FIG. 1 illustrates the configuration of a driving assistance system 100 including a driving assistance device 1 for a vehicle according to the present embodiment. The driving assistance system 100 includes one or more sensors 2, a subject vehicle information acquisition device 3, a traffic restriction information acquisition device 4, and a traffic restricted section determination device 5.

Two or more sensors 2 are provided in the vehicle, forming a sensor group or a set of sensors that work in coordination with each other. The sensors 2 detect the presence or absence of objects, including other vehicles, in the surroundings of the subject vehicle, the distance to the objects, and the relative speed and relative acceleration of the objects. The sensors 2 detect one or more of the outer shape of an object, whether the object is a stationary or moving, the size of an object, the existence direction of an object, the number of objects, and the location or position at which an object is present.

Objects to be detected include traffic restriction signs. Traffic restriction signs indicate the location of a traffic restricted section. Traffic restricted sections include accident site sections, fallen object avoidance sections, littered object avoidance sections, flooded sections, pothole sections, event sections, and other sections in which normal traffic is restricted. Traffic restriction signs include both stationary and moving objects. Traffic restriction signs also include pylons, road cones, barrels, trade signs, and construction vehicles placed in traffic restricted sections. Traffic restriction signs also include guides and guide robots located near traffic restricted sections, as well as the hand flags they carry. Traffic restriction signs indicate the location of a traffic restricted section by their presence. When traffic restriction signs are objects, their distinctive shapes and forms indicate that their location is a traffic restricted section. For example, when objects such as pylons, road cones, and barrels as traffic restriction signs are arranged, they indicate that their location is a construction section. Traffic restriction signs can also have no distinctive shape but instead indicate information identifying a traffic restricted section in which traffic restrictions are in effect. Traffic restriction signs include information displayed on signs and displays provided on roads, as well as the information itself. Information specifying a traffic restricted section includes the location of the traffic restricted section and the date and time the traffic restriction will be implemented. Traffic restriction signs indicate information about traffic restricted sections, such as road closures, traffic restrictions, and detours due to marathons and road races. The processor 10 is equipped with a calendar and a clock, and can compare the date and time of the traffic restriction with the time of travel to determine whether or not the traffic restriction on the travel route or travel lane will affect the subject vehicle.

The sensors 2 include one or more cameras 21 disposed on the vehicle. The one or more cameras 21 capture images of the surroundings of the vehicle in all directions. The cameras 21 include image sensors with imaging elements such as CCDs, ultrasonic cameras, and infrared cameras. The cameras 21 include at least a front camera that captures images in front of the vehicle, a rear camera that captures images behind or to the rear sides of the vehicle, and left and right-side cameras that capture images of the left and right sides of the vehicle and the front and rear of the left and right sides. The types of cameras 21 are not limited, provided that they can capture images in all directions from the vehicle. A single camera 21 mounted on a base with a rotation mechanism can be used, or this can be used in combination with two or more other cameras 21.

The sensors 2 include a radar device 22 that detects (ranges) the presence, position, and position changes of physical objects around the subject vehicle. The radar device 22 is a device that measures the distance and direction to an object by emitting electromagnetic waves toward the object and measuring the reflected waves. Examples of the radar device 22 include laser radar, millimeter-wave radar (LRF), a LiDAR (light detection and ranging) unit, ultrasonic radar, and sonar.

The sensors 2 also include a GPS (Global Positioning System) unit, a gyro sensor, a vehicle speed sensor, and other devices, and detect the position of the subject vehicle at each timing.

Each sensor 2 can also acquire information from on-board devices and external devices in accordance with its respective function. The detection information acquired by the sensors 2 is provided to the processor 10. The detection information acquired by the sensors 2 can also be provided to the subject vehicle information acquisition device 3, traffic restriction information acquisition device 4, and traffic restricted section determination device 5. The processor 10 can acquire the detection information directly from the cameras 21 and radar device 22, or can acquire it via the subject vehicle information acquisition device 3, traffic restriction information acquisition device 4, or traffic restricted section determination device 5, which will be described later.

The subject vehicle information acquisition device 3 calculates the current position, attitude, speed, acceleration, behavior, and traveling direction of the subject vehicle based on the detection information acquired from the sensors 2 and/or the subject vehicle information obtained from the vehicle, and provides the calculated information to the processor 10. The subject vehicle information acquisition device 3 references map information 6 and lane information 61 to specify the lane in which the subject vehicle travels. The subject vehicle information acquisition device 3 references the map information 6 and lane information 61 to extract branch lanes branching off from the lane in which the subject vehicle travels, and specify the location of the branch lane.

The traffic restriction information acquisition device 4 recognizes traffic restriction signs around the subject vehicle, particularly on the subject vehicle's travel lane, based on the detection information acquired from the sensors 2. The subject vehicle's travel lane includes the lanes in which the subject vehicle will travel in the future. The traffic restriction information acquisition device 4 captures the presented information with the cameras 21 and recognizes the location of traffic restricted sections and the date and time of traffic restrictions through text recognition or graphic recognition processing. The traffic restriction information acquisition device 4 communicates with an external server, such as a roadside device, via a communication device 30 to recognize the date and time of traffic restriction, the location of the traffic restricted section, and the contents of information indicated by the traffic restriction signs, including detours. The traffic restriction information acquisition device 4 provides the contents of information indicated by the recognized traffic restriction signs to the processor 10. The process of recognizing the contents of information indicated by the traffic restriction signs can also be executed by the processor 10.

The traffic restricted section determination device 5 specifies the location and range of a traffic restricted section in which traffic restriction will be implemented, based on the information indicated by the detected or recognized traffic restriction sign. Although not particularly limited, the traffic restricted section determination device 5 determines that a traffic restricted section exists within a predetermined distance from the location at which a barrel as the traffic restriction sign is detected. The traffic restricted section defined by the traffic restriction sign and the traffic restricted section recognized by the processor 10 can be the same or different. The processor 10 can define a traffic restricted section taking into account the driving functions and driving performance of the subject vehicle from a perspective of executing appropriate driving assistance. The traffic restricted section can be defined based on the information indicated by the traffic restriction sign, in accordance with the performance of the subject vehicle, the driver's skills, and the driver's preferences. For example, the processor 10 can define a traffic restricted section for this driving assistance processing by adding a margin to the traffic restricted section defined by the traffic restriction sign.

Furthermore, the traffic restricted section determination device 5 has a function of detecting a branch lane located ahead of the subject vehicle based on detection information from the sensors 2. The traffic restricted section determination device 5 extracts features of the branch lane from the image captured by the cameras 21 and compares them with pre-stored features to detect the presence of a branch lane ahead of the subject vehicle and the location of the branch lane. Examples of features of a branch lane include the presence of lane marks indicating the boundary with the main lane, the presence of a V-shaped lane mark intersection formed at a connection portion between the main lane and the branch lane, the presence of a pair of lane marks of the branch lane that extend in a different direction from the main lane, and the presence of a pair of lane marks that intersect with the main lane.

In addition, the traffic restricted section determination device 5 can detect branch lanes located ahead of the subject vehicle by referencing information on the branch area, branch start point, and branch end point of the branch lane provided in the high-precision map information of the map information 6, which will be described below. The traffic restricted section determination device 5 sends the branch lane detection results to the processor 10. The processor 10 can itself execute branch lane detection processing based on the information obtained from the sensors 2.

The driving assistance system 100 has map information 6 and lane information 61. The map information 6 and lane information 61 are recorded in a storage device or an external server accessible to the processor 10 via the communication device 30. The map information 6 is high-precision map information. The map information 6 includes the lane information 61, which is referenced when autonomous lane change control is executed. The lane information 61 includes identification information for identifying each of a plurality of lanes belonging to a road. The map information 6 and/or lane information 61 includes information about branch lanes that branch off in different directions from a main road, specifically, information on one or more of the location of a branch area of the branch lane, a branch start point of the branch lane, and a branch end point of the branch lane.

Navigation device 7 references the map information 6 and calculates a route to a set destination. This route includes a target trajectory. The calculated route and target trajectory are provided to the vehicle controller 200 and used for the autonomous driving control and driving assistance control.

Vehicle controller 200 includes a steering control device 210 and a drive control device 220. The vehicle controller 200 can execute autonomous driving or manual driving depending on the level of the driving assistance specified by the processor 10. When the driving assistance level is high, the vehicle controller 200 executes the autonomous driving, including autonomous lane change control. Specifically, the vehicle controller 200 acquires command values for the autonomous driving control in accordance with the driving plan created by the processor 10 of the driving assistance device 1 and makes the subject vehicle travel along a target trajectory to the destination. The route is composed of a plurality of consecutive target trajectories associated with the command values. The command values for the driving control are generated by the vehicle controller 200 or the processor 10. The command values include a set speed when making the vehicle travel, and the vehicle controller 200 drives the subject vehicle in accordance with the set speed. On the basis of the command values, the vehicle controller 200 inputs the longitudinal force and lateral force that control the traveling position of the subject vehicle. The behavior of the vehicle body and the behavior of the wheels are controlled in accordance with these inputs so that the subject vehicle autonomously travels along a route to the destination. On the basis of these controls, at least one of the drive actuators and braking actuators of the vehicle body's drive mechanism, which is controlled by the drive control device 220, and the steering actuator of the steering control device 210, which is activated as needed, operate autonomously to execute the autonomous driving control, making the vehicle travel autonomously along the target trajectory to the destination.

As a matter of course, the vehicle controller 200 can execute the driving in accordance with the command values based on manual operation by the driver input via an input/output device 20. The vehicle controller 200 can request a hands-on mode depending on the situation around the subject vehicle, and in that case, executes driving in accordance with the driver's manual operations which is input via the input/output device 20. In particular, when the driving assistance level determined by the processor 10 is low and hands-on driving is required, the vehicle controller 200 does not perform the autonomous driving control, but executes the driving in accordance with manual operation by the driver input via the input/output device 20. Likewise, when the driving assistance level determined by the processor 10 is low and only the manual lane change driving is possible, the vehicle controller 200 does not perform the autonomous lane change control, but executes the lane change driving in accordance with manual operation by the driver input via the input/output device 20.

The driving assistance system 100 includes a driving assistance device 1. The processor 10 included in the driving assistance device 1 includes a ROM (Read Only Memory) 12 that stores programs for controlling the autonomous or manual driving, a CPU (Central Processing Unit) 11 that executes the programs stored in the ROM 12, and a RAM (Random Access Memory) 13 that serves as an accessible storage device. The present driving assistance method is carried out using the hardware components of the driving assistance system 100. The driving assistance method is used by the processor 10.

The processor 10 restricts the contents of driving assistance executed in a traffic restricted section and cancels the restriction on the driving assistance when the subject vehicle changes lanes from a travel lane to a branch lane while the driving assistance to be executed is being restricted. The processor 10 executes each function using software for achieving at least a function of determining whether or not the subject vehicle is traveling through a traffic restricted section, a function of determining whether or not to change lanes to a branch lane, and a function of determining whether or not to restrict the contents of driving assistance (whether to maintain or cancel the restriction) in accordance with the traffic restricted section determination results, in cooperation with the hardware components illustrated in FIG. 1.

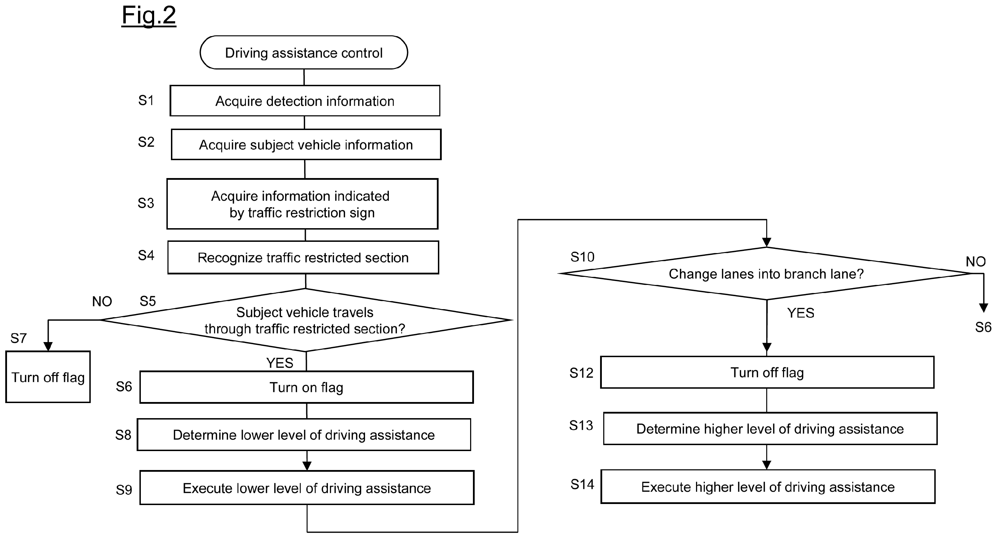

The assistance processing executed in the driving control of the subject vehicle will be described with reference to the flowchart of FIG. 2. The processing related to the driving assistance method for the subject vehicle is carried out by the processor 10. The processor 10 acquires detection information about the subject vehicle's surroundings via the sensors 2 (S1). The detection information includes detection information based on image capture information from the cameras 21 and/or detection information based on observation information from the radar device 22. The processor 10 can acquire the detection information about the subject vehicle's surroundings from roadside devices via the communication device 30. The processor 10 acquires the subject vehicle information, such as the subject vehicle's current location and speed, from the subject vehicle information acquisition device 3 (S2). The processor 10 references the detection information from the sensors 2 or the lane information 61 in the map information 6 to acquire the lane information about the subject vehicle's current travel lane as one of the subject vehicle information items. The processor 10 references the map information 6 and/or the lane information 61 to acquire information about the existence and location of branch lanes branching off from the subject vehicle's travel lane.

The sensors 2 detect the surroundings of the subject vehicle and provides the detection information to the processor 10. The processor 10 uses the detection information from the sensors 2 to detect a traffic restriction sign in the subject vehicle's travel lane. The processor 10 acquires information indicated by the detected traffic restriction sign (S3). The processor 10 can acquire the information indicated by the traffic restriction sign via the traffic restriction information acquisition device 4.

The processor 10 recognizes a traffic restricted section based on the information indicated by the traffic restriction sign (S4). The information indicated by the traffic restriction sign includes at least the location of the traffic restricted section in which the traffic restriction is in effect. The location of the traffic restricted section is specified by one or more of the information items of lane identification information, node information, link information, and latitude/longitude. Specifically, the processor 10 pre-stores the outer shape features of traffic restriction signs, such as pylons, road cones, barrels, trade signs, construction vehicles, traffic guides, traffic robots, and traffic flags, which are tangible objects disposed to indicate construction sections. The processor 10 extracts the outer shape features of the traffic restriction sign obtained from the detection information of the sensor 2, compares the stored outer shape features of the traffic restriction sign with the features of the detected object, and performs pattern matching to recognize the information indicated by the traffic restriction sign and the location of the traffic restricted section indicated by the disposed traffic restriction sign. For example, the processor 10 recognizes that a pylon is a sign indicating a construction section and that the location at which the pylon is disposed is a traffic restricted section due to the construction. Furthermore, while the outer shape of a trade sign or sign itself does not have a specific meaning, the intangible information displayed on the sign or sign can have meaning. The processor 10 acquires information written on the trade sign or sign through images captured by the cameras 21 and recognizes the contents of the written text and graphics to acquire information about the traffic regulation. The processor 10 references pre-stored text and graphic information related to the traffic regulation and recognizes the location, date, time, and position of the traffic regulation based on the text recognized from the captured images. Alternatively, the processor 10 can directly acquire the contents of the traffic restriction sign from a server device external to the subject vehicle (e.g., a roadside device) via the communication device 30.

The processor 10 determines whether or not the subject vehicle will travel through the specified traffic restricted section (S5). The processor 10 compares the current location of the subject vehicle acquired from the sensors 2 and/or the subject vehicle information acquisition device 3 with the location information of the traffic restricted section specified in S4, and determines whether or not the subject vehicle will travel through the traffic restricted section based on whether or not the current location of the subject vehicle belongs to the traffic restricted section. This determination process is repeatedly executed at a predetermined interval. When the processor 10 determines that the subject vehicle will travel through the traffic restricted section (YES in S5), it turns on a flag indicating that the subject vehicle will travel through the traffic restricted section (S6). The processor 10 executes the driving assistance for the subject vehicle depending on the result of the determination as to whether or not the subject vehicle will travel through the traffic restricted section. When the subject vehicle will travel through the traffic restricted section, the processor 10 restricts the contents of the driving assistance to be executed, while when the subject vehicle will not travel through the traffic restricted section, the processor 10 does not restrict the contents of the driving assistance to be executed (upon restriction, cancels the restriction). When the subject vehicle transitions from a non-traffic restricted section to a traffic restricted section, the contents of the driving assistance is restricted, while when the subject vehicle transitions from a traffic restricted section to a non-traffic restricted section, the restriction on the contents of the driving assistance is canceled. The level of the driving assistance when the contents of the driving assistance are restricted is lower than the level of the driving assistance when the contents of the driving assistance are not restricted (when the restriction is canceled). When the contents of the driving assistance are not restricted (when the restriction is canceled), the level of the driving assistance is set to a standard level according to the vehicle performance, while when the contents of the driving assistance are restricted, it is set to a reduced level that is relatively lower than the standard level. When the flag is turned on (S6), that is, when it is determined that the subject vehicle will travel through the traffic restricted section, the contents of the driving assistance to be executed are restricted, and a lower level of the driving assistance is determined than when it is determined that the subject vehicle will not travel through the traffic restricted section (S8). The processor 10 executes the driving assistance with its contents lower than those of the determined standard level (S9). Even after the low-level driving assistance begins to be executed (S9), the processor 10 periodically determines whether or not the subject vehicle will travel through a traffic restricted section and executes the driving assistance at a level in accordance with the determination (S1 to S9). When the subject vehicle will travel through the traffic restricted section, the processor 10 determines that careful driving that takes individual circumstances into consideration is preferable to uniform autonomous control, and therefore reduces the level of the driving assistance. On the other hand, when the processor 10 determines that the subject vehicle will not travel through the traffic restricted section (NO in S5), it turns off the flag indicating that the subject vehicle will travel through the traffic restricted section (S7). Turning off the flag in S7 includes not turning on the flag, that is, not performing any special processing. When the flag indicating that the subject vehicle will travel through the traffic restricted section is off, the normal standard level of the driving assistance is maintained (S14). The driver can use the relatively high level of the autonomous driving functions provided by the subject vehicle.

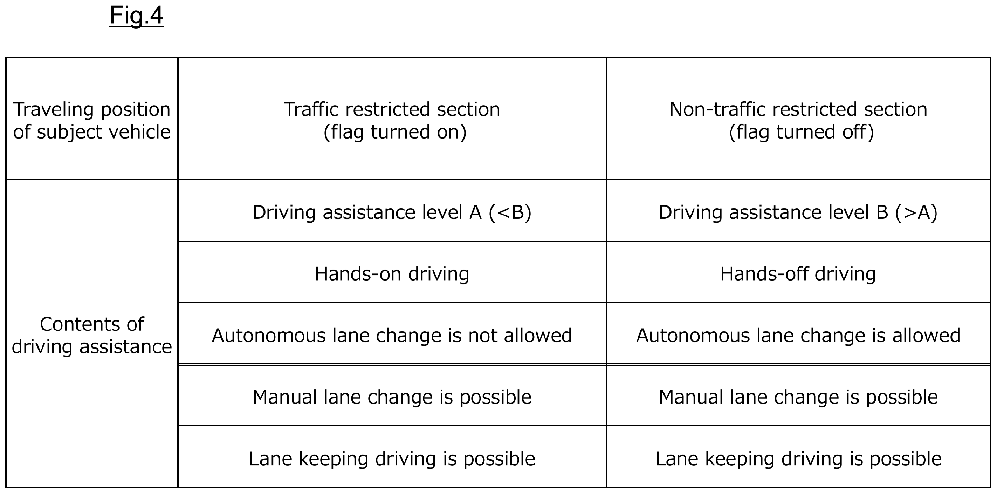

Here, the contents of the driving assistance will be described with reference to FIG. 4. When the contents of the driving assistance are not restricted and the driving assistance level is high, the driving is executed with relatively few operations required for the driver. When the contents of the driving assistance are restricted and the driving assistance level is low, the driving is executed with relatively many operations required for the driver. In other words, when the driving assistance level is high, the driver's workload is light, while when the driving assistance level is low, the driver's workload is heavy. In FIG. 4, the contents of the driving assistance with a relatively low level are identified as a driving assistance level A, and the contents of the driving assistance with a relatively high level are identified as a driving assistance level B (>A). The low driving assistance level A is executed when it is determined that the subject vehicle will travel through the traffic restricted section and the contents of the driving assistance are restricted, while the high driving assistance level B is executed when it is determined that the subject vehicle will not travel through the traffic restricted section and the restrictions on the contents of the driving assistance are canceled. The driving assistance at the driving assistance level A requires hands-on driving, which requires the driver to drive the vehicle for himself/herself. The driving assistance at the driving assistance level B permits hands-off driving, in which the subject vehicle drives autonomously. The driving assistance at the driving assistance level A permits only lane changes performed by the driver's own manual operation (driving), and the autonomous lane change control is prohibited. The driving assistance at the driving assistance level B permits the autonomous driving, including the autonomous lane change control. Note that both the driving assistance levels A and B allow for execution of lane changes performed by the driver's own manual operation and lane keeping control, which maintains the vehicle's lateral position within the travel lane.

Thus, in the present embodiment, when the subject vehicle travels through a traffic-restricted section, the contents of the driving assistance executed are more restricted than when the subject vehicle does not travel through a traffic-restricted section, and the driving assistance level is determined to be lower. Construction-related traffic-restricted sections are home to construction machinery/tools, and workers, while flooded or submerged traffic-restricted sections are home to drainage machinery and detour guides. Paying close attention to all of these objects and people while controlling the speed and traveling position is thought to require delicate recognition and consideration of each individual situation, rather than the autonomous control based on predetermined standards. Furthermore, in traffic restricted sections, part of the lane is prohibited to enter, making it difficult to recognize the travelable area referenced in the autonomous driving. For this reason, the contents of the driving assistance to be executed in traffic restricted sections are restricted, and the level of the driving assistance is lowered, so that the manual driving is executed rather than the autonomous driving. On the other hand, when the subject vehicle is not traveling through a traffic restricted section, the contents of the driving assistance to be executed are not restricted, and a higher level of the driving assistance is determined than when the subject vehicle is traveling through the traffic restricted section.

Specifically, when it is determined that the subject vehicle will travel through a traffic restricted section, the processor 10 requests hands-on driving, as a relatively low level of driving assistance. Additionally or independently, when it is determined that the subject vehicle will travel through a traffic restricted section, the processor 10 commands the prohibition of autonomous lane change control, as a relatively low level of driving assistance. This allows the driver to execute the driving based on his/her own determination only when the subject vehicle will travel through the traffic restricted section. On the other hand, when it is determined that the subject vehicle will not travel through a traffic restricted section, hands-off driving is permitted as a relatively high level of driving assistance. In addition to, or independently of, this, the autonomous lane change control is executed when it is determined that the subject vehicle will not travel through a traffic restricted section. This allows the subject vehicle to execute autonomous driving when the subject vehicle is not traveling through a traffic restricted section, thus reducing the driver's burden.

Referring again to FIG. 2, the processing after the process (S9) in which low-level driving assistance is executed when the subject vehicle is traveling through a traffic restricted section will be described. The processor 10 determines whether or not the subject vehicle will change lanes into a branch lane (S10), and when it is determined that the subject vehicle will change lanes into the branch lane (YES in S10), the processor 10 determines that the subject vehicle will not travel through a traffic restricted section, and turns off a flag indicating that the subject vehicle will travel through the traffic restricted section (S12). When it is determined that the subject vehicle will not change lanes into a branch lane (NO in S10), the determination result in step S6 is maintained, and the flag indicating that the subject vehicle will travel through the traffic restricted section remains on (S6). When the flag indicating that the subject vehicle will travel through the traffic restricted section is turned off (S12), the restriction on the contents of the driving assistance is canceled, and the level of the driving assistance for the subject vehicle is determined to be relatively high, depending on the determination result (S13). When the processor 10 determines that the subject vehicle will change lanes into a branch lane, it triggers the processor 10 to cancel the restriction on the contents of the driving assistance, changes the driving assistance level to be high, and executes the high-level driving assistance (S14). Even after the start of execution of the high-level driving assistance begins (S14), the processor 10 periodically determines whether or not the subject vehicle is traveling through a traffic restricted section and executes the driving assistance at a level according to the determination (S1 to S14). The high level of driving assistance is the standard level available depending on the vehicle's performance.

Even if traffic restrictions are in effect due to construction or other reasons in the main lane in which the subject vehicle is traveling, once the subject vehicle changes lanes into a branch lane, the branch lane is a separate road from the main road, and therefore there is a high possibility that traffic restrictions are no longer in effect. The present invention focuses on this point and, when the subject vehicle changes lanes from the main lane including a traffic restricted section to a branch lane, determines that the traffic restricted section ends and turns off the flag indicating that the subject vehicle will travel through the traffic restricted section. This allows for early and appropriate determination of the end of the traffic restricted section, based on the determination that the subject vehicle has changed lanes into a branch lane, even if it is determined that the subject vehicle will travel through the traffic restricted section in the main lane. As a result, the driving assistance level that has been reduced because the subject vehicle is traveling through a traffic restricted section can be restored to its original high level. Specifically, turning off the flag indicating that the subject vehicle will travel through a traffic restricted section enables hands-off driving and/or lane changes through autonomous control, thereby reducing the driver's burden at an early stage. Because careful driving through a traffic restricted section is preferred, the driving assistance level is lowered and the driver is required to perform hands-on driving or change lanes manually. Driving with a low level of the driving assistance places a heavy burden on the driver, so it is preferred to shorten the driving time and driving distance required to lower the driving assistance level. Increasing the driving assistance level allows the vehicle's autonomous driving function to be used, and the occupants can use the hands-off driving and autonomous lane-changing functions. By quickly determining the end of a traffic restricted section, the processor 10 of the present embodiment can shorten the driving time and driving distance required through the traffic restricted section, and the the driving time and driving distance required to lower the driving assistance level can be shortened. In this method, the trigger of changing lanes from the main lane to a branch lane is recognized as a change in the traffic regulation situation, thereby allowing the vehicle to appropriately determine when it passes the end of the traffic restricted section and quickly restore the driving assistance level.

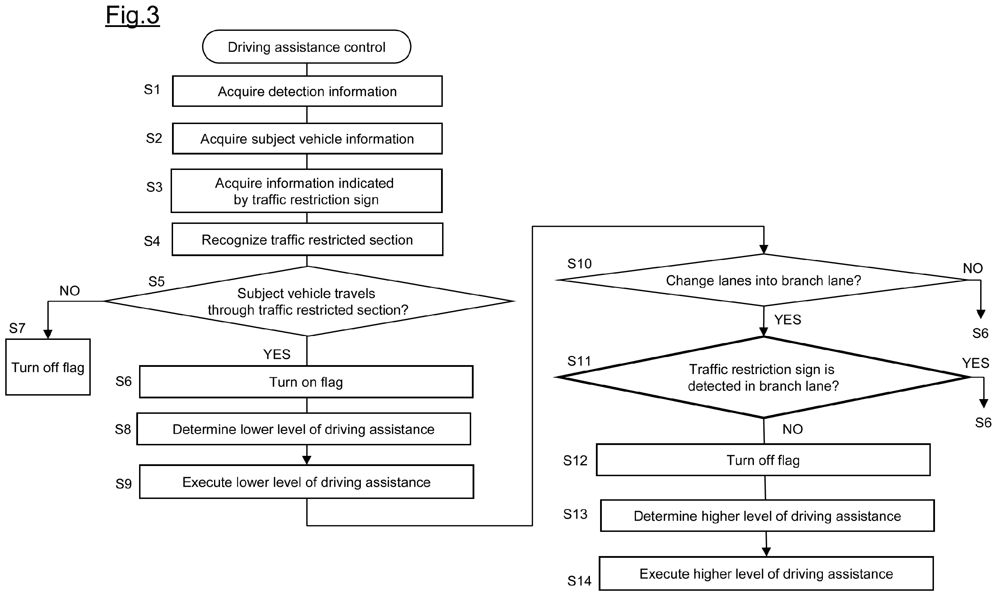

Although not particularly limited, in the present embodiment, after it is determined that the subject vehicle will change lanes into a branch lane (YES in S10), a process can be executed to confirm that no traffic restriction sign is present in the branch lane. FIG. 3 illustrates the overall process in which a process S11 for confirming that no traffic restriction sign is present in the branch lane is added after S10 (YES in S10) in the flowchart of FIG. 2. When the processor 10 detects a traffic restriction sign indicating the presence of a traffic restricted section in the branch lane into which the subject vehicle will change lanes (YES in S11), the processor 10 determines that the subject vehicle will travel through the traffic restricted section and keeps the flag on (S6), even if it is determined that the subject vehicle will change lanes into the branch lane (YES in S10). In other words, even when the determination condition that the subject vehicle changes lanes to a branch lane and will not travel through a traffic restricted section is met, such a determination is canceled and the flag-on state executed in S6, and the determination result that the subject vehicle will travel through the traffic restricted section, are maintained.

On the other hand, when no traffic restriction sign is detected in the branch lane into which the subject vehicle is changing lanes (NO in S11), the processor 10 determines that the subject vehicle will not travel through a traffic restricted section and turns the flag off (S12). In other words, the flag-on determination executed in S6 is changed to a flag-off determination. When changing lanes from the main lane which includes a traffic restricted section to a branch lane, the processor 10 predicts that the subject vehicle will not travel through a traffic restricted section, but prepares for the possibility that a traffic restricted section may also be set in the branch lane. In the present embodiment, when the subject vehicle changes lanes, it confirms that there is no traffic restriction sign in the branch lane, then determines that the subject vehicle will not travel through a traffic restricted section, and turns off the flag (NO in S11 to S12). Thus, when processing S11, the processor 10 determines that the subject vehicle will not travel through a traffic restricted section only if the subject vehicle changes lanes into a branch lane and there is no traffic restriction sign in the branch lane. When the subject vehicle changes lanes into a branch lane, the processor 10 verifies the determination result for the main lane early while preliminarily confirming the existence of a traffic restricted section in the branch lane. This increases the reliability of the determination result and prevents the determination result of traveling through a traffic restricted section from being changed (the flag being turned off or on) due to an erroneous prediction. As a result, the end of the traffic restricted section can be determined early while ensuring the accuracy of the determination result.

Next, a scheme of determining whether or not the subject vehicle will change lanes into a branch lane will be described. The processor 10 determines whether or not the subject vehicle will change lanes into a branch lane, based on the positional relationship between the subject vehicle's current position, obtained by the subject vehicle information acquisition device 3, and the branch lane existing on the traveling direction side of the subject vehicle. The processor 10 references the map information 6 and/or the lane information 61, acquires the positional relationship between the subject vehicle and the branch lane, and determines whether or not the subject vehicle will change lanes into the branch lane. The map information 6 and/or the lane information 61 includes one or more of the branch lane's attributes, location, location area, and branch location. The branch location includes the branch lane's branch end point and/or branch start point. The processor 10 also acquires the positional relationship between the subject vehicle and the branch lane based on the captured image obtained from the cameras 21 or the observation information obtained from the radar device 22, and determines whether or not the subject vehicle will change lanes into the branch lane.

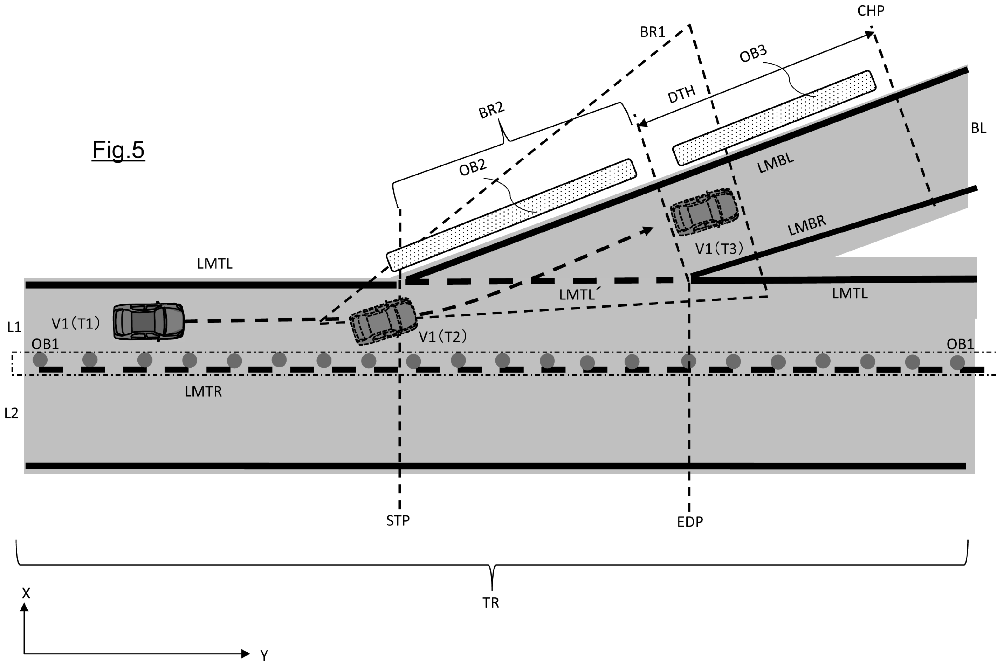

FIG. 5 illustrates an example of the aspect of a branch lane. FIG. 5 illustrates a branch lane BL, which branches off to the left in the traveling direction (the Y-axis direction in the figure) from a main lane L1, which is the travel lane in which a subject vehicle V1 (T1) is currently traveling at timing T1. A plurality of traffic restriction signs OB1 (illustrated as circles) are disposed along the extending direction of the main lane L1. The traffic restriction signs OB1 are, for example, pylons or the like, and the section of the main lane L1 in which the traffic restriction signs OB1 are disposed is a traffic restricted section TR. The main lane L1 illustrated in FIG. 5 includes the traffic restricted section TR, and the subject vehicle V1 (T1) travels through the traffic restricted section TR of the main lane L1, which is the travel lane. The processor 10 sets a flag indicating that the subject vehicle V1 (T1) is traveling through the traffic restricted section TR. The branch lane BL is a physically separate lane from the main lane L1 and its adjacent lane L2. The branch lane BL has a structure connected to the main lane L1 at an angle. The main lane L1 is defined by a pair of lane marks LMTR and LMTL, each having a predetermined width in the road width direction (the X-axis direction in the figure), and the branch lane BL is defined by a pair of lane marks LMBR and LMBL, each having a predetermined width in the road width direction. The pair of lane marks LMTR and LMTL and the pair of lane marks LMBR and LMBL define respective different lanes. The branch lane BL is not included in the main lane L1.

The area where the main lane L1 and the branch lane BL connect is called a branch area. FIG. 5 exemplifies a branch area BR1, indicated by a triangular dashed line including the connection between the main lane L1 and the branch lane BL, and a branch area BR2 where the main lane L1 and the branch lane BL connect.

The branch area BR1 is an area that includes the branch lane BL and part of the main lane TL as seen from the subject vehicle V1 (T1) traveling on the main lane L1. The processor 10 detects the branch area BR1 ahead of the subject vehicle V1 (T1) based on changes in the shape of the road structure using captured images and observation information acquired from the sensors 2 of the subject vehicle V1 (T1). The processor 10 can also detect the branch area BR1 that includes the portion formed with the branch lane BL, by referencing the map information 6 and/or the lane information 61. When the current location of the subject vehicle V1 (T1) obtained as the subject vehicle position information is approaching the branch area BR1 within a predetermined distance or within a predetermined TTC, or when the current location of the subject vehicle V1 (T1) belongs to the branch area BR1, the processor 10 determines that the subject vehicle V1 (T1) will change lanes from the main lane L1, which is the travel lane, into the branch lane BL. Furthermore, the processor 10 can determine that the subject vehicle V1 (T1) will change lanes into the branch lane BL based on the fact that the branch lane BL exists on the traveling direction side of the current location of the subject vehicle obtained by the subject vehicle information acquisition device 3 on the route to the subject vehicle's destination calculated by navigation device 7 and that branch lane BL is part of the route.

The processor 10 specifies another branch area BR2. The branch area BR2 is the travel area from a branch start point STP to a branch end point EDP. In FIG. 5, the area in which the subject vehicle V1 (T1) travels from the branch start point STP to the branch end point EDP is illustrated as the branch area BR2. The branch start point STP is the point at which a lane mark LMTL, which defines the left side of the main lane L1, intersects with a lane mark LMBL, which defines the left side of branch lane BL. The processor 10 detects the branch start point STP at which the lane mark LMTL defining the main lane intersects with the lane mark LMBL defining the branch lane BL, based on an image captured by the cameras 21 which captures an image ahead of the subject vehicle V1 (T1). When observed from the subject vehicle V1 (T1) heading toward the branch area BR2, the intersection of the lane mark LMTL and the lane mark LMBL at the branch start point STP appears to form a "V" shape. The processor 10 detects the existence and position of the branch start point STP based on the image captured by the cameras 21, using the "V" shape of this lane mark as a feature point. Furthermore, depending on the road, only a lane mark LMTL' of a portion of the lane mark LMTL of the main lane L1 that connects to the branch lane BL may be a different aspect, for example a dashed line for a solid line, as illustrated in FIG. 5. On the basis of the change in an aspect of the lane marks LMTL and LMTL' of the main lane L1, the processor 10 detects the branch start point STP at which the lane mark LMTL defining the main lane L1 intersects with the lane mark LMBL defining the branch lane BL. Furthermore, the processor 10 can detect the branch start point STP by referencing the map information and/or the lane information 61.

The branch end point EDP is the point downstream of the branch start point STP (on the traveling direction side of the subject vehicle), at which the lane mark LMTL defining the left side of the main lane L1 intersects with the lane mark LMBR defining the right side of the branch lane BL. The processor 10 can detect the branch end point EDP at which the lane mark LMTL defining the main lane L1 intersects with the lane mark LMBR defining the branch lane BL, based on an image captured by the cameras 21 which captures an image ahead of the subject vehicle V1 (T1). When observed from the subject vehicle V1 (T1) heading toward the branch area BR2, the intersection of the lane mark LMTL and the lane mark LMBR appears to form a "V" shape. The processor 10 can detect the branch end point EDP based on the image captured by the cameras 21, using the "V" shape as a feature point. Depending on the road, only a lane mark LMTL' of a portion of the lane mark LMTL of the main lane L1 that connects to the branch lane BL may be a different aspect, for example a dashed line for a solid line. On the basis of the change in an aspect of the lane marks LMTL and LMTL' of the main lane L1, the processor 10 can detect the branch end point EDP at which the lane mark LMTL defining the main lane L1 intersects with the lane mark LMBR defining the branch lane BL. Furthermore, the processor 10 can also detect the branch end point EDP by referencing the map information and/or the lane information 61. While FIG. 5 illustrates an example of the branch lane BL extending to the left of the main lane L1 in the traveling direction, the same applies to a branch lane BL extending to the right of the main lane L1 in the traveling direction.

The processor 10 detects the above-described branch area BR1 or BR2, and when the subject vehicle V1 (T1) reaches the above-described branch area BR1 or BR2, can determine that the subject vehicle V1 (T1) has changed lanes. When the current position of the subject vehicle V1 (T1) detected by the sensors 2 approaches the branch area BR1 or BR2 within a predetermined distance (or within a predetermined TTC), the processor 10 can determine that the subject vehicle V1 (T1) has changed lanes. The predetermined distance/predetermined TTC is a short distance that allows for determination of arrival. On the basis of the positional relationship between the branch area BR1 or BR2 and the subject vehicle V1, the processor 10 determines that the subject vehicle V1 has changed lanes to the branch lane BL and turns off a flag indicating the travel through the traffic restricted section TR. The subject vehicle V1 changing lanes to the branch lane BL triggers the determination that the travel through the traffic restricted section TR has ended. This allows the control of the contents of the driving assistance being executed to be canceled and the reduced level of driving assistance to be switched back to the original, higher level at an earlier stage, thereby reducing the burden on the driver.

In principle, when the processor 10 determines that the subject vehicle has approached or entered the branch area BR1 and changed lanes into a branch lane, it determines that the subject vehicle will not travel through the traffic restricted section TR and turns off the determination flag for traveling through the traffic restricted section TR. Even in this case, the processor 10 preliminarily confirms whether or not traffic restriction signs OB2 and OB3 are present in the branch lane, as performed in S11 of FIG. 3 above. In FIG. 5, the traffic restriction signs OB2 and OB3 are illustrated as fictitious entities to exemplify the location of the traffic restriction sign to be detected. When the traffic restriction signs OB2 and OB3 are detected in the branch lane, the processor 10 determines that the subject vehicle will continue to travel through the traffic restricted section without turning off the determination flag of travel in the traffic restricted section TR, even if it determines that the subject vehicle will change lanes into the branch lane BL, keeping this flag on. This can prevent the determination of whether or not to travel through the traffic restricted section from switching on and off, and the driving assistance appropriate to the situation can be continued.

The processor 10 detects the branch start point STP in the branch lane BL, and when the subject vehicle V1 (T1) reaches the branch start point STP, determines that the subject vehicle has changed lanes. FIG. 5 illustrates the state in which the subject vehicle V1 (T2) reaches the branch start point STP at timing T2, which is later than timing T1. The subject vehicle V1 (T2) reaching the branch start point STP refers to the state in which the branch start point STP belongs to the area in which the subject vehicle V1 (T2) exists. In other words, the state in which the subject vehicle V1 (T2) has reached the branch start point STP includes all states from a state in which the subject vehicle V1 (T2) approaches the branch start point STP (when the leading edge of the subject vehicle overlaps with the branch start point STP) to a state in which the subject vehicle V1 (T2) has passed the branch start point STP (when the trailing edge of the subject vehicle overlaps with the branch start point STP). From the perspective of increasing the certainty that the subject vehicle V1 (T2) has changed lanes to the branch start point STP, it is preferred to define the state in which the subject vehicle V1 (T2) has reached the branch start point STP as the state in which the subject vehicle V1 (T2) has passed the branch start point STP.

When the subject vehicle V1 (T2) reaches the branch start point STP, the processor 10 determines that the subject vehicle V1 (T2) has changed lanes into the branch lane and turns off the flag indicating that the subject vehicle V1 (T2) will travel through the traffic restricted section TR. This allows the possibility of the subject vehicle V1 (T2) changing lanes to be determined at an early stage (upstream in the traveling direction), making it possible to appropriately determine the end point of the traffic restricted section and to switch (return) the reduced driving assistance level to the original high level at an early stage, and the burden on the driver can be reduced.

When determining that the subject vehicle V1 (T2) has changed lanes into the branch lane BL based on the arrival of the subject vehicle V1 (T2) at the branch start point STP using the branch start point STP as a reference, the processor 10 preliminarily confirms that there is no traffic restricted section in the branch lane BL. Specifically, the processor 10 determines the direction in which the branch lane BL exists and the direction in which the branch lane BL extends based on the position of the branch start point STP of the branch lane BL. This determination is preferably made before the subject vehicle V1 (T2) enters the branch lane BL, when the subject vehicle V1 (T2) will travel in the main lane L1 and approaches the branch start point STP. In the example illustrated in FIG. 5, the branch lane BL extends diagonally to the left (X direction in the figure) of the traveling direction of the subject vehicle V1 (T1) or subject vehicle V1 (T2) (Y axis direction in the figure). The location of the traffic restriction sign in the branch lane BL is not particularly limited. Provided that the position is along the branch lane BL, it is determined that the traffic restricted section exists in the branch lane BL even when the traffic restriction sign OB2 is detected upstream of the branch lane BL (closer to the subject vehicle V1) or even when the traffic restriction sign OB3 is detected downstream of the branch lane BL (farther from the subject vehicle V1).

The processor 10 determines that the subject vehicle V1 (T1) or subject vehicle V1 (T2) is not traveling in a traffic restricted section only when the traffic restriction sign OB2 and/or OB3, which indicates the presence of a traffic restricted section, is not detected in the direction in which the branch lane BL exists. In other words, upon detection of at least the traffic restriction sign OB2 in the direction from the main lane L1 to the branch lane BL when the subject vehicle V1 (T1) is traveling in the main lane L1, even if the subject vehicle V1 (T2) reaches the branch start point STP, the determination that the subject vehicle V1 is traveling in a traffic restricted section is maintained.

In principle, the processor 10 turns off the flag indicating that the subject vehicle V1 (T2) is traveling through the traffic restricted section, based on the fact that the subject vehicle V1 (T2) has reached the branch start point STP and changed lanes from the main road L1, which includes the traffic restricted section, to another road, the branch lane BL. Even in this case, the processor 10 preliminarily confirm whether or not the traffic restriction signs OB2 and OB3 are present in the branch lane BL, which includes the branch start point STP, as performed in S11 of FIG. 3. When a traffic restriction sign is detected in the branch lane BL, which includes the branch start point STP, the processor 10 maintains the determination result, made when traveling on the main road L1, that the subject vehicle V1 is traveling through the traffic restricted section TR, even if it is determined that the subject vehicle will change lanes into a branch lane. In other words, without turning off the determination flag indicating the travel through a traffic restricted section, the processor 10 determines that the subject vehicle will travel through a traffic restricted section and maintains the determination flag on. This can prevent the flag for determining whether or not to travel through a traffic restricted section from being turned on or off, and the assistance appropriate to the situation can be continued. In addition, the subject vehicle V1 can travel through the traffic restricted section of the branch lane BL with low-level driving assistance, allowing the driver to drive carefully.

From a similar perspective, the processor 10 determines the direction in which the branch lane BL exists, based on the position of the branch start point STP of the branch lane BL, and if the traffic restriction signs OB2 and OB3 are not detected in the direction in which the branch lane BL exists, determines that the subject vehicle V1 will not travel through the traffic restricted section TR when the subject vehicle V1 reaches the branch start point STP. This makes it possible to confirm that the branch lane BL does not include a traffic restricted section, while quickly determining the end of the traffic restricted section. On the basis of the determination that the subject vehicle will not travel through the traffic restricted section, the driving assistance that has been suppressed to a low level can be switched to a high-level driving assistance, allowing the driving control to be performed.

The processor 10 detects the branch end point EDP in the branch lane BL, and when the subject vehicle V1 (T1) reaches the branch end point EDP, determines that the subject vehicle has changed lanes. FIG. 5 illustrates the state in which the subject vehicle V1 (T3) reaches the branch end point EDP at timing T3, which is later than timing T2. The subject vehicle V1 (T3) reaching the branch end point EDP refers to the state in which the branch end point EDP belongs to the area in which the subject vehicle V1 (T3) exists. In other words, the state in which the subject vehicle V1 (T3) has reached the branch end point EDP includes all states from a state in which the subject vehicle V1 (T3) approaches the branch end point EDP (when the leading edge of the subject vehicle overlaps with the branch end point EDP) to a state in which the subject vehicle V1 (T3) has passed the branch end point EDP (when the trailing edge of the subject vehicle overlaps with the branch end point EDP). From the perspective of increasing the reliability of determination that the subject vehicle V1 (T3) has changed lanes to the branch end point EDP, it is preferred to define the state in which the subject vehicle V1 (T3) has reached the branch end point EDP as the state in which the subject vehicle V1 (T3) has passed the branch end point EDP.

When the subject vehicle V1 (T3) has reached the branch end point EDP, the processor 10 determines that the subject vehicle has changed lanes to the branch lane, and turns off the flag indicating that the subject vehicle will travel in a traffic restricted section. When it is detected that the subject vehicle V1 (T3) has reached the branch end point EDP, it is extremely unlikely that the subject vehicle V1 (T3) will return to the main lane L1. In other words, it can be determined with high accuracy that the subject vehicle V1 (T3) will change lanes into the branch lane BL. The subject vehicle V1, traveling upstream of the branch area BR2, that is, near the branch start point STP, can proceed into the branch lane BL, but the possibility cannot be ruled out that it will continue traveling on the main lane L1 without proceeding into the branch lane BL.

The processor 10 can determine with high accuracy that the subject vehicle V1 will change lanes into the branch lane BL, based on the subject vehicle V1 (T3) reaching the branch end point EDP. This makes it possible to accurately determine the end of the traffic restricted section based on the subject vehicle V1 (T2) moving from the main lane L1, which includes a traffic restricted section, to another branch lane BL. As a result, it is possible to cancel the restriction on the driving assistance set when traveling through a traffic restricted section and switch the reduced level of driving assistance back to the original high level (standard level) in a timely manner, thus reducing the burden on the driver.

In principle, when the processor 10 determines that the subject vehicle V1 (T3) has reached the branch end point EDP and changed lanes into a branch lane, it determines that the subject vehicle will not travel through the traffic restricted section TR and turns off the travel determination flag for the traffic restricted section TR. Even in this case, the processor 10 preliminarily confirms whether or not the traffic restriction signs OB2 and OB3 are present in the branch lane BL that includes the branch end point EDP, as performed in S11 of FIG. 3 above. When the processor 10 detects the traffic restriction sign OB3 near the branch end point EDP or the traffic restriction sign OB2 upstream of it, the processor 10 does not turn off the travel determination flag for the traffic restricted section TR, even if it determines that the subject vehicle V1 (T3) will change lanes into the branch lane. In this case, the processor 10 determines that the subject vehicle V1 (T3) will travel through the traffic restricted section and keeps the determination flag on. This can prevent the flag for determining whether or not to drive through a traffic restricted section from being turned on or off, and the driving assistance appropriate to the situation can be continued.

Incidentally, the condition for turning off the flag indicating the travel through a traffic restricted section can also be a requirement that the vehicle should be a predetermined distance away from a state in which no traffic restriction sign is detected. In the example illustrated in FIG. 5, when the subject vehicle changes lanes into the branch lane BL and arrives at a planned end point of traffic restriction CHP, which is a predetermined distance DTH away, from a state in which no traffic restriction sign is detected on either side of the subject vehicle, the traffic restricted section is determined to have ended, and the flag indicating the travel through a traffic restricted section is turned off. Thus, if the condition requires the vehicle to be a predetermined distance or more away from a traffic restriction sign, the driving assistance level will not be restored unless the subject vehicle travels more than the predetermined distance. In contrast, in the present embodiment, it is determined that the subject vehicle will not travel through the traffic restricted section when changing lanes from the main lane L1 to the branch lane BL. The locations of the branch areas BR1 and BR2, the branch start point STP, and branch end point EDP for determination of a lane change are all located upstream of the planned end point of traffic restriction CHP, allowing for early determination of whether or not the subject vehicle will travel through a traffic restricted section.

### Description of Reference Numerals

100... Driving assistance system, 1... Driving assistance device, 10... Processor, 11... CPU, 12... ROM, 13... RAM, 20... Input/output device, 30... Communication device, 2... Sensors, 21... Camera, 22... Radar device, 3... Subject vehicle information acquisition device, 4... Traffic restriction information acquisition device, 5... Traffic restricted section determination device, 6... Map information, 61... Lane information, 7... Navigation device, 200... Vehicle controller, 210... Steering control device, 220... Drive control device

## Claims

1. A driving assistance method used in a processor to execute driving assistance of a subject vehicle, the processor operating to:
detect a traffic restriction sign on a travel lane of the subject vehicle;
restrict contents of driving assistance executed in a traffic restricted section recognized based on the traffic restriction sign; and
when the subject vehicle changes lanes to a branch lane that branches from the travel lane while the restriction is in effect, cancel the restriction.

2. The driving assistance method according to claim 1, wherein the processor operates to, upon detection of the traffic restriction sign in the branch lane, even when a determination is made that the subject vehicle will change lanes into the branch lane, determine that the subject vehicle will travel through the traffic restricted section.

3. The driving assistance method according to claim 1 or 2, wherein the processor operates to detect a branch area of the branch lane, and when the subject vehicle reaches the branch area, determine that the subject vehicle will change lanes.

4. The driving assistance method according to claim 1 or 2, wherein the processor operates to detect a branch end point of the branch lane, and when the subject vehicle reaches the branch end point, determine that the subject vehicle will change lanes.

5. The driving assistance method according to claim 4, wherein the processor operates to, upon detection of the traffic restriction sign at the branch end point of the branch lane, even when a determination is made that the subject vehicle will change lanes into the branch lane, determine that the subject vehicle will travel through the traffic restricted section.

6. The driving assistance method according to claim 1, wherein the processor operates to detect a branch start point of the branch lane, and when the subject vehicle reaches the branch start point, determine that the subject vehicle will change lanes.

7. The driving assistance method according to claim 6, wherein the processor operates to determine a direction in which the branch lane exists based on a position of the branch start point of the branch lane, and upon detection of the traffic restriction sign in the direction in which the branch lane exists, even when a determination is made that the subject vehicle will change lanes into the branch lane, determine that the subject vehicle will travel through the traffic restricted section.

8. The driving assistance method according to claim 6, wherein the processor operates to determine a direction in which the branch lane exists based on a position of the branch start point of the branch lane, and upon no detection of the traffic restriction sign in the direction in which the branch lane exists, when the subject vehicle reaches the branch start point, determine that the subject vehicle will not travel through the traffic restricted section.

9. The driving assistance method according to any one of claims 1 to 8, wherein the processor operates to, when a determination is made that the subject vehicle will travel through the traffic restricted section, execute a lower level of the driving assistance than when a determination is made that the subject vehicle will not travel through the traffic restricted section.

10. The driving assistance method according to claim 9, wherein the processor operates to, when a determination is made that the subject vehicle will travel through the traffic restricted section, execute a request of hands-on driving and/or prohibition of autonomous lane change control as the relatively low level of the driving assistance.

11. The driving assistance method according to claim 9 or 10, wherein the processor operates to, when a determination is made that the subject vehicle will not travel through the traffic restricted section, execute a permission of hands-off driving and/or execution of autonomous lane change control as the relatively low level of the driving assistance.

12. A driving assistance device comprising a processor to execute driving assistance of a subject vehicle, the processor operating to:
detect a traffic restriction sign on a travel lane of the subject vehicle;
restrict contents of driving assistance executed in a traffic restricted section recognized based on the traffic restriction sign; and
when the subject vehicle changes lanes to a branch lane that branches from the travel lane while the restriction is in effect, cancel the restriction.
